# EUROPEAN PATENT APPLICATION

(11) **EP 4 757 051 A1**
(43) Date of publication of application: **10.06.2026**
(21) Application number: 25187748.6
(22) Date of filing: 07.07.2025
(51) Int. Cl.: H01M 50/54, H01M 10/052, H01M 10/0583, H01M 50/103, H01M 50/15, H01M 50/553

(54) **SECONDARY BATTERY AND METHOD OF MANUFACTURING SECONDARY BATTERY**

(30) Priority: 03.12.2024 KR 20240177498
(71) Applicant: SAMSUNG SDI CO., LTD., Yongin-si, Gyeonggi-do 17084 (KR)
(72) Inventor: JOE, Yun Sang, 16678 Suwon-si, Gyeonggi-do (KR)
(74) Representative: Gulde & Partner

(57) **Abstract**

The present disclosure provides a secondary battery including an electrode assembly in which a positive electrode and a negative electrode are alternately stacked and a separator is disposed between the positive electrode and the negative electrode, a positive electrode housing which covers the electrode assembly and remains electrically connected to the positive electrode, a negative electrode housing which covers the electrode assembly and remains electrically connected to the negative electrode, and a case which is coupled to the positive electrode housing and the negative electrode housing to seal the electrode assembly, wherein the positive electrode and the negative electrode on which a notching process is not performed are coupled to the positive electrode housing and the negative electrode housing, respectively, and a method of manufacturing a secondary battery.

## Description

### BACKGROUND

### 1. Field of the Disclosure

The present disclosure relates to a secondary battery and a method of manufacturing a secondary battery.

### 2. Discussion of Related Art

In general, as the demand for portable electronic devices such as notebooks, video cameras, and portable phones has increased, and the commercialization of robots, electric vehicles, and the like has begun in earnest, research and development into high performance secondary batteries capable of repeated charging and discharging has also increased.

Secondary batteries are widely used for driving not only small devices such as portable electronic devices but also medium-to-large apparatuses such as electric vehicles or energy storage systems (ESSs) or for storing energy. In the case of the medium-to-large apparatuses, a plurality of battery cells are electrically connected to form one battery module in order to improve an output and/or capacity of the battery.

A secondary battery includes an electrode assembly including a pair of electrodes, that is, a positive electrode and a negative electrode, and a separator interposed between the electrodes. A process of manufacturing the electrodes of the secondary battery includes a mixing process, a coating process, a roll pressing process, a slitting process, and a notching process.

In the mixing process, a slurry is prepared by mixing an active material and a solvent required for manufacturing the battery, and in the coating process, a copper foil and an aluminum foil are thinly and uniformly coated with the electrode slurry. In the roll pressing process, the coated electrode is thinly compressed by rolling the coated electrode. In the slitting process, the compressed electrode is longitudinally cut according to a size of the desired battery. In the notching process, a tab is made by cutting off an unnecessary non-coated portion. In the notching process, foreign metal mass may be generated.

The information disclosed in this Background section is provided for enhancement of understanding of the background of the present disclosure. It may contain information that does not constitute related (or prior) art.

### SUMMARY OF THE DISCLOSURE

The present disclosure is directed to providing a secondary battery and a method of manufacturing a secondary battery capable of solving problems of electrode plate detachment, burrs, and foreign metal mass generated in an electrode process, omitting a notching process to solve a tab contact defect problem generated in an assembly process, improving process efficiency by using all of a non-coated portion, and reducing product defects.

These and other aspects and features of the present disclosure will be described in or will be apparent from the following description of some embodiments of the present disclosure.

In accordance with one aspect of the present invention, there is provided a secondary battery including an electrode assembly in which a positive electrode and a negative electrode are alternately stacked and a separator is disposed between the positive electrode and the negative electrode, a positive electrode housing which covers the electrode assembly and remains electrically connected to the positive electrode, a negative electrode housing which covers the electrode assembly and remains electrically connected to the negative electrode, and a case which is coupled to the positive electrode housing and the negative electrode housing to seal the electrode assembly, wherein the positive electrode and the negative electrode on which a notching process is not performed are coupled to the positive electrode housing and the negative electrode housing, respectively.

The positive electrode may include a positive electrode plate, a positive electrode mixture part in which the positive electrode plate is coated with an active material, and a positive electrode non-coated portion which is disposed on each of two edges of the positive electrode plate, is not coated with the active material, and is coupled to the positive electrode housing.

The positive electrode non-coated portion may be disposed to have a length in a first direction.

The negative electrode may include a negative electrode plate, a negative electrode mixture part in which the negative electrode plate is coated with an active material, and a negative electrode non-coated portion which is disposed on each of two edges of the negative electrode plate, is not coated with the active material, and is coupled to the negative electrode housing.

The negative electrode non-coated portion may be disposed to have a length in a second direction perpendicular to the first direction.

A length of the positive electrode non-coated portion may be 150% to 200% of a length of the negative electrode non-coated portion.

A length of the negative electrode mixture part may be greater than a width of the positive electrode mixture part, and the separator may prevent contact between the positive electrode mixture part and the negative electrode mixture part.

The separator may be individually formed and disposed between the positive electrode and the negative electrode.
the separator may be stacked in a zigzag type, and the positive electrode and the negative electrode may be alternately inserted into the separator.

The positive electrode housing may include a positive electrode cap on which a positive electrode terminal is formed, a positive electrode connecting member which is electrically connected to the positive electrode and is connected to the positive electrode terminal, and a positive electrode insulating member which insulates the positive electrode connecting member.

The positive electrode connecting member may include a positive electrode connecting cover plate to which the positive electrode insulating member is attached, a positive electrode connecting protrusion which protrudes from the positive electrode connecting cover plate and is connected to the positive electrode terminal, and a positive electrode connecting plate which extends from the positive electrode connecting cover plate and is electrically connected to the positive electrode.

The positive electrode insulating member may include at least two or more of a first positive electrode insulating part attached to an upper surface of the positive electrode connecting cover plate, a second positive electrode insulating part attached to a lower surface of the positive electrode connecting cover plate, and a third positive electrode insulating part attached to a circumference of the positive electrode connecting protrusion.

The negative electrode housing may include a negative electrode cap on which a negative electrode terminal is formed, a negative electrode connecting member which is electrically connected to the negative electrode and is connected to the negative electrode terminal, and a negative electrode insulating member which insulates the negative electrode connecting member.

The negative electrode connecting member may include a negative electrode connecting cover plate to which the negative electrode insulating member is attached, a negative electrode connecting protrusion which protrudes from the negative electrode connecting cover plate and is connected to the negative electrode terminal, and a negative electrode connecting plate which extends from the negative electrode connecting cover plate and is electrically connected to the negative electrode.

The negative electrode insulating member may include at least two or more of a first negative electrode insulating part attached to an upper surface of the negative electrode connecting cover plate, a second negative electrode insulating part attached to a lower surface of the negative electrode connecting cover plate, and a third negative electrode insulating part attached to a circumference of the negative electrode connecting protrusion.

In accordance with another aspect of the present invention, there is provided a method of manufacturing a secondary battery including an electrode production operation of producing a positive electrode and a negative electrode, an electrode assembly operation of alternately stacking the positive electrode and the negative electrode in a state in which a notching process to be performed on the positive electrode and the negative electrode is omitted and arranging a separator between the positive electrode and the negative electrode, an electrode connection operation of electrically connecting a positive electrode housing to the positive electrode and electrically connecting a negative electrode housing to the negative electrode, and an electrode sealing operation of coupling a case to the positive electrode housing and the negative electrode housing to seal the positive electrode and the negative electrode.

In the electrode assembly operation, the separator may be individually formed and is disposed between the positive electrode and the negative electrode.

In the electrode assembly operation, the separator may be stacked in a zigzag type, and the positive electrode and the negative electrode may be alternately inserted into the separator.

In the electrode connection operation, a positive electrode non-coated portion, on which the notching process is not performed in the positive electrode, may be welded to the positive electrode housing, and a negative electrode non-coated portion, on which the notching process is not performed in the negative electrode, may be welded to the negative electrode housing.

In the electrode sealing operation, the case having a quadrangular band shape may be coupled to the positive electrode housing and the negative electrode housing to seal inner spaces of the positive electrode housing and the negative electrode housing.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is limited to the drawings:
FIG. 1 is a schematic perspective view of an exterior of a secondary battery according to an embodiment of the present disclosure;
FIG. 2 is an exploded schematic perspective view of the secondary battery according to an embodiment of the present disclosure;
FIG. 3 is a schematic view of a positive electrode according to an embodiment of the present disclosure;
FIG. 4 is a schematic view of a negative electrode according to an embodiment of the present disclosure;
FIG. 5 is a schematic plan view of a state in which the positive electrode and the negative electrode are stacked according to an embodiment of the present disclosure;
FIG. 6 is a schematic view of a stacking method of an electrode assembly according to a first example of the present disclosure;
FIG. 7 is a schematic view of a stacking method of an electrode assembly according to a second example of the present disclosure;
FIG. 8 is a schematic view of a positive electrode housing according to an embodiment of the present disclosure;
FIG. 9 is a schematic view of a negative electrode housing according to an embodiment of the present disclosure;
FIG. 10 is a schematic view of a negative electrode insulating member according to a first example of the present disclosure;
FIG. 11 is a schematic view of a negative electrode insulating member according to a second example of the present disclosure;
FIG. 12 is a schematic view of a negative electrode insulating member according to a third example of the present disclosure;
FIG. 13 is a flowchart of a method of manufacturing a secondary battery according to an embodiment of the present disclosure;
FIG. 14 is a schematic view of a state in which a positive electrode non-coated portion is welded to a positive electrode housing according to an embodiment of the present disclosure; and
FIG. 15 is a schematic view of a state in which a negative electrode non-coated portion is welded to a negative electrode housing according to an embodiment of the present disclosure.

### DETAILED DESCRIPTION OF EXEMPLARY EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure. Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein includes all sub-ranges of the same numerical precision subsumed within the recited range. For example, a range of "1.0 to 10.0" includes all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended includes all lower numerical limitations subsumed therein, and any minimum numerical limitation recited in this specification includes all higher numerical limitations subsumed therein. Accordingly, the Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an element is referred to as being disposed (or located or positioned) on the "above (or below)" or "on (or under)" a component, it may mean that the element is placed in contact with the upper (or lower) surface of the component and may also mean that another component may be interposed between the component and any element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

Hereinafter, when the present disclosure is described with reference to a plurality of embodiments, redundant description of components which are the same or correspond to each other throughout the plurality of embodiments will be omitted. For example, in the case of a component which is disclosed in one embodiment and is the same as or corresponds to another component disclosed in another embodiment, description of the component will be omitted in the later embodiment, and a component having a different point compared to that of one embodiment will be mainly described in another embodiment.

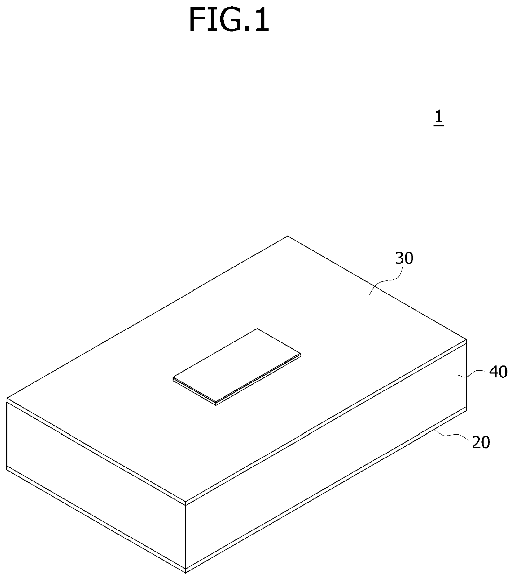

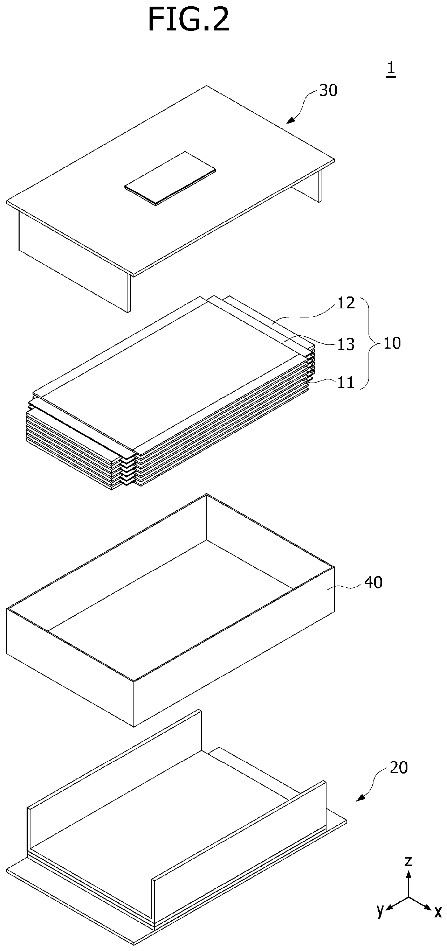

FIG. 1 is a schematic perspective view of an exterior of a secondary battery according to an embodiment of the present disclosure, and FIG. 2 is an exploded schematic perspective view of the secondary battery according to an embodiment of the present disclosure. Referring to FIGS. 1 and 2, a secondary battery 1 according to an embodiment of the present disclosure includes an electrode assembly 10, a positive electrode housing 20, a negative electrode housing 30, and a case 40.

In the electrode assembly 10, a positive electrode 11 and a negative electrode 12 may be alternately stacked, and a separator 13 may be disposed between the positive electrodes 11 and the negative electrodes 12.

Hereinafter, the secondary battery 1, which is a prismatic lithium-ion battery cell, will be described as an example. However, the present disclosure is not limited thereto, and the secondary battery 1 may be, for example, a lithium polymer battery and/or cylindrical battery.

The positive electrode housing 20 may cover the electrode assembly 10 and be electrically connected to the positive electrode 11. The positive electrode housing 20 may cover a portion of the electrode assembly 10 and may be disconnected from the negative electrode 12. As shown in FIG. 2, the positive electrode housing 20 may cover a lower portion of the electrode assembly 10 and be coupled to the positive electrode 11 of the electrode assembly 10 in an x-axis direction.

The negative electrode housing 30 may cover the electrode assembly 10 and be electrically connected to the negative electrode 12. The negative electrode housing 30 may cover a portion of the electrode assembly 10 and may be disconnected from the positive electrode 11. As shown in FIG. 2, the negative electrode housing 30 may cover an upper portion of the electrode assembly 10 and be coupled to the negative electrode 12 of the electrode assembly 10 in a y-axis direction.

The case 40 may be coupled to the positive electrode housing 20 and the negative electrode housing 30 to seal the electrode assembly 10. As shown in FIG. 2, the case 40 may cover the electrode assembly 10 in the x-axis direction and the y-axis direction.

A positive electrode 11 and a negative electrode 12, on which a notching process is omitted, may be coupled to the positive electrode housing 20 and the negative electrode housing 30, respectively. That is, in the present disclosure, after a slitting process in which each of the positive electrodes 11 and the negative electrodes 12 is cut in a width direction, a notching process that is conventionally performed to form a tab in a region excluding an active material layer may be omitted. Accordingly and advantageously, a problem of generating burrs, foreign mass, or wrinkles in the notching process can be solved.

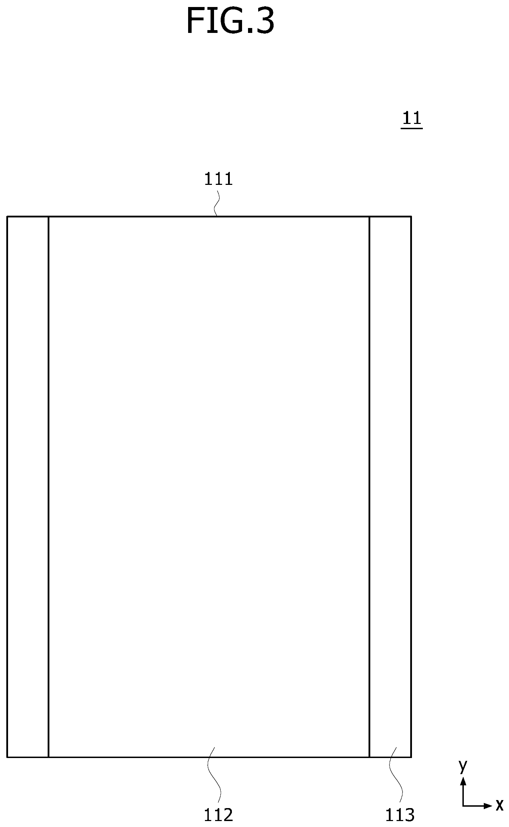

FIG. 3 is a schematic view of the positive electrode according to an embodiment of the present disclosure. Referring to FIGS. 2 and 3, the positive electrode 11 according to an embodiment of the present invention may include a positive electrode plate 111, a positive electrode coated part 112, and a positive electrode non-coated portion 113.

The positive electrode plate 111 may be a current collector formed of a thin metal foil. For example, the positive electrode plate 111 may be an aluminum foil.

The positive electrode coated part 112 may be a region in which the positive electrode plate 111 is coated with a positive electrode active material. For example, the positive electrode active material may be a transition metal oxide such as LiCoO2, LiNiO2, LiMn2O4, or the like.

The positive electrode non-coated portion 113 may be a region in which the positive electrode plate 111 is not coated with the positive electrode active material. The positive electrode non-coated portion 113 may be coupled to the positive electrode housing 20.

A plurality of positive electrode mixture parts 112 may be spaced apart from each other in a width direction of the positive electrode plate 111 and coated with the positive electrode active material and cut in the width direction of the positive electrode plate 111 in the slitting process, so that the positive electrode mixture parts 112 may be disposed on the positive electrode plate 111. In this case, both sides of the positive electrode plate 111 in the width direction may be positive electrode non-coated portions 113.

The positive electrode non-coated portion 113 may be disposed to have a length in a first direction. The first direction may be the y-axis direction as shown in FIGS. 2 and 3. The positive electrode mixture parts 112 may be disposed between the positive electrode non-coated portions 113 disposed apart in the x-axis direction corresponding to the width direction of the positive electrode 11.

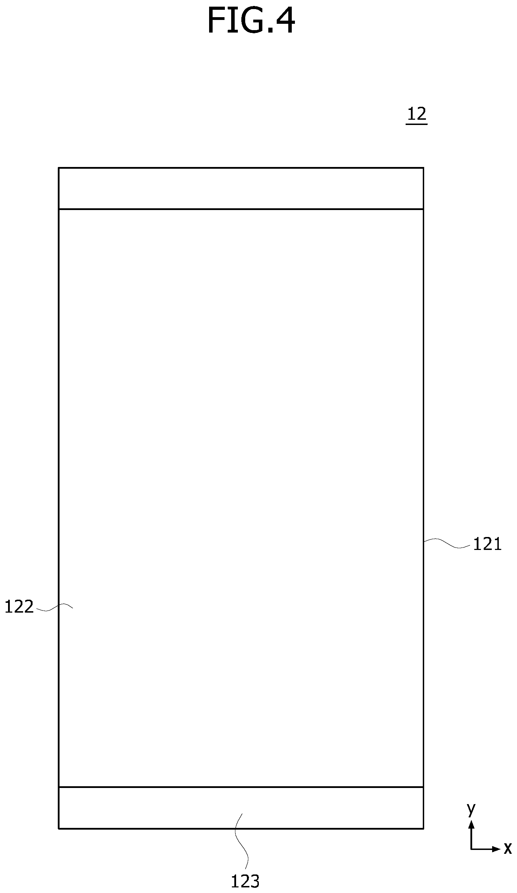

FIG. 4 is a schematic view of the negative electrode according to an embodiment of the present disclosure. Referring to FIGS. 2 and 4, the negative electrode 12 according to an embodiment of the present disclosure may include a negative electrode plate 121, a negative electrode coated part 122, and a negative electrode non-coated portion 123.

The negative electrode plate 121 may be a current collector formed of a thin metal foil. For example, the negative electrode plate 121 may be a copper foil.

The negative electrode coated part 122 may be a region in which the negative electrode plate 121 is coated with a negative electrode active material such as graphite or carbon.

The negative electrode non-coated portion 123 may be a region in which the negative electrode plate 121 is not coated with the negative electrode active material. The negative electrode non-coated portion 123 may be coupled to the negative electrode housing 30.

A plurality of negative electrode mixture parts 122 may be spaced apart from each other in a width direction of the negative electrode plate 121 and coated with the negative electrode active material and cut in the width direction of the negative electrode plate 121 in the slitting process. As such, the negative electrode mixture parts 122 may be disposed on the negative electrode plate 121. In this case, both sides of the negative electrode plate 121 in the width direction may be negative electrode non-coated portions 123.

The negative electrode non-coated portion 123 may be disposed to have a length in a second direction perpendicular to the first direction. The second direction may be the x-axis direction as shown in FIGS. 2 and 4. The negative electrode mixture parts 122 may be disposed between the negative electrode non-coated portions 123 disposed apart in the y-axis direction corresponding to the width direction of the negative electrode 12.

Referring to FIG. 2, positive electrodes 11 and negative electrodes 12 may be stacked in a z-axis direction, and separators 13 may be disposed between the positive electrodes 11 and the negative electrodes 12 to electrically separate the positive electrodes 11 from the negative electrodes 12. The separators 13 may be formed, for example, of polyethylene (PE) or polypropylene (PP).

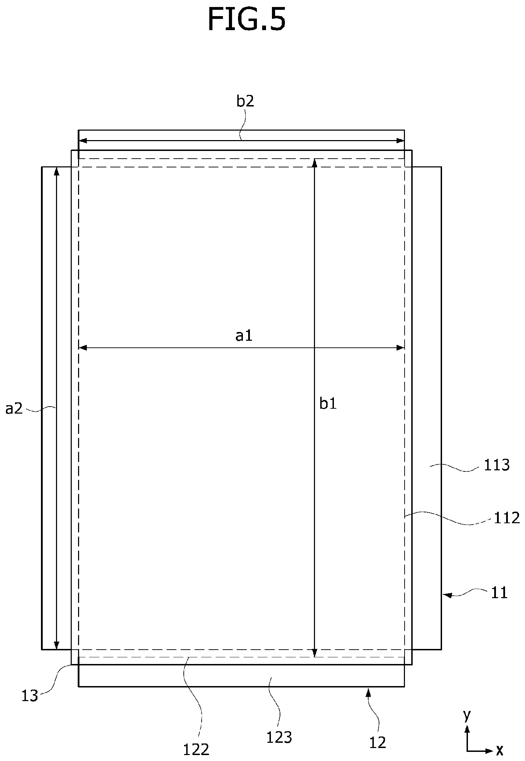

FIG. 5 is a schematic plan view of a state in which the positive electrode and the negative electrode are stacked according to one embodiment of the present disclosure. Referring to FIG. 5, the negative electrode 12, the separator 13, the positive electrode 11, and the separator 13 may be sequentially and repeatedly stacked. The separator 13 may cover the negative electrode coated part 122, and an edge of the separator 13 may cover a portion of the negative electrode non-coated portion 123. The separator 13 may cover the positive electrode coated part 112, and an edge of the separator 13 may cover a portion of the positive electrode non-coated portion 113. That is, direct contact between the positive electrode 11 and the negative electrode 12 is prevented by the separator 13. The separator 13 may have a size that covers both the negative electrode coated part 122 and the positive electrode coated part 112.

Referring to FIGS. 3 to 5, the positive electrode 11 has a length in the y-axis direction and a width in the x-axis direction. The negative electrode 12 has a length in the x-axis direction and a width in the y-axis direction.

A length b1 of the negative electrode coated part 122 may be greater than a width a1 of the positive electrode coated part 112. In other embodiments, the width a1 of the positive electrode mixture part 112 may be equal to the length b1 of the negative electrode mixture part 122, or the width a1 of the positive electrode mixture part 112 may be greater than the length b1 of the negative electrode mixture part 122.

A length of the positive electrode plate 111 may be a length a2 of the positive electrode non-coated portion 113, and a length of the negative electrode plate 121 may be a length b2 of the negative electrode non-coated portion 123.

In particular embodiments, the length a2 of the positive electrode non-coated portion 113 may be 8 to 12 µm, and the length b2 of the negative electrode non-coated portion 123 may be 4 to 8 µm.

A loading level may vary according to a foam factor of the secondary battery and a size of the case 40. As an example, the positive electrode 11 may have a maximum loading level of 63 mg/cm², and the negative electrode 12 may have a maximum loading level of 40 mg/cm².

In the present disclosure, since an electrode plate manufactured in a coating process may be used in a stacked structure without the notching process, there is no limitation as to the size of the electrode plate. However, when there is a large size difference between the positive electrode 11 and the negative electrode 12, a difference in length between the positive electrode non-coated portion 113 and the negative electrode non-coated portion 123 increases, and a difference in thermal resistance due to electrical resistance may increase. When electric conductivities of aluminum and copper are considered, the length a2 of the positive electrode non-coated portion 113 formed of aluminum may be 150% to 200% of the length b2 of the negative electrode non-coated portion 123 formed of copper.

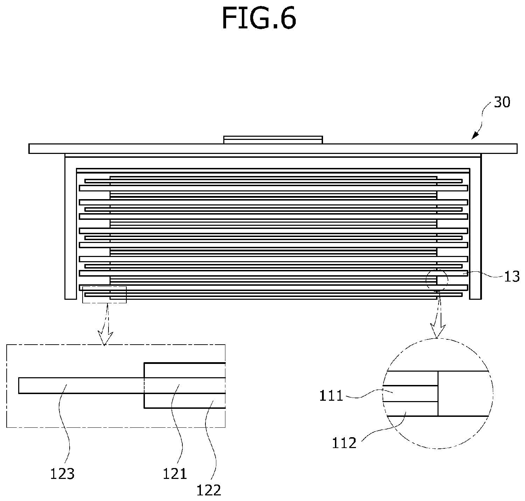

FIG. 6 is a schematic view of a stacking method of an electrode assembly according to a first example of the present disclosure. Referring to FIG. 6, in an electrode assembly 10 according to the first example, a separator 13 may be individually formed and disposed between a positive electrode 11 and a negative electrode 12. The separator 13 may be sized to cover a positive electrode coated part 112 and a negative electrode coated part 122. In FIG. 6, a negative electrode housing 30 may be disposed on both sides of the negative electrode 12, and the negative electrode housing 30 and a negative electrode non-coated portion 123 may be connected by welding. In this configuration, the separator 13 protruding farther than the negative electrode non-coated portion 123 may be melted and thereby removed due to heat generated during a welding process.

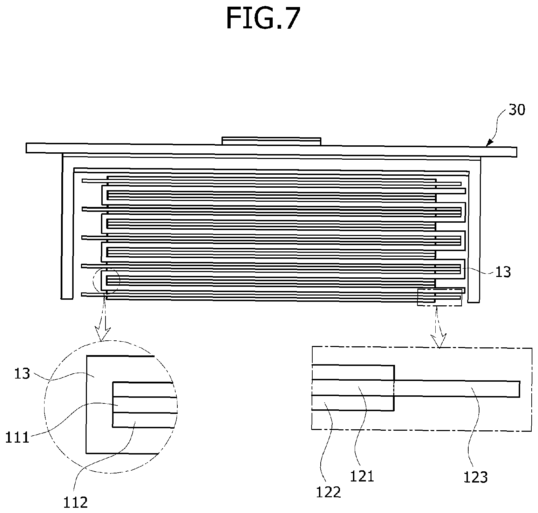

FIG. 7 is a schematic view of a stacking method of an electrode assembly according to a second example of the present disclosure. Referring to FIG. 7, in an electrode assembly 10 according to the second example, a separator 13 may be a zigzag type, and a positive electrode 11 and a negative electrode 12 may be alternately inserted into the separator 13. A negative electrode housing 30 may be disposed to surround both sides of the negative electrode 12, and the negative electrode housing 30 and a negative electrode non-coated portion 123 may be connected by welding. In this case, a part of the separator 13, which is formed in a zigzag shape and surrounds the negative electrode non-coated portion 123, may be melted and thereby removed due to heat generated during a welding process. That is, even when the negative electrode non-coated portion 123 is covered by the separator 13, part of the separator 13 is removed due to high temperatures, and the negative electrode non-coated portion 123 and the negative electrode housing 30 may be coupled to each other.

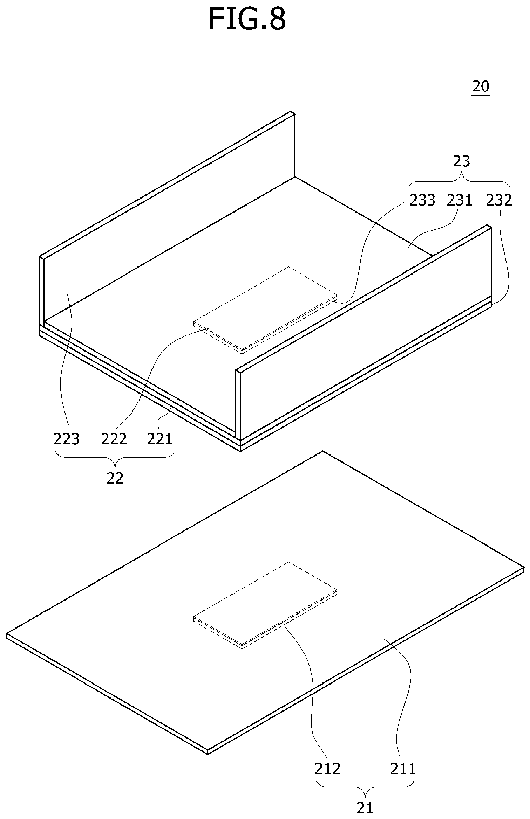

FIG. 8 is a schematic view of the positive electrode housing according to an embodiment of the present disclosure. Referring to FIG. 8, the positive electrode housing 20 may include a positive electrode cap 21, a positive electrode connecting member 22, and a positive electrode insulating member 23.

The positive electrode cap 21 may include a positive electrode cover 211 and a positive electrode terminal 212. The positive electrode cover 211 may form part of an exterior of the secondary battery 1. The positive electrode terminal 212 may be a portion of the positive electrode cover 211. The positive electrode terminal 212 may be a specific region though which electric energy is transmitted from the positive electrode cover 211. In FIG. 8, the positive electrode cover 211 is disposed to cover a lower portion of the electrode assembly 10, and the positive electrode terminal 212 protrudes downward or upward from the positive electrode cover 211. An opposite side of the protruding positive electrode terminal 212 may have a recessed shape.

The positive electrode connecting member 22 may be electrically connected to the positive electrode(s) 11 and may be connected to the positive electrode terminal 212. A state in which the positive electrode(s) 11 and the positive electrode terminal 212 are electrically connected may be maintained by the positive electrode connecting member 22.

The positive electrode insulating member 23 may insulate the positive electrode connecting member 22. Except for the positive electrode terminal 212, electrical connection between the positive electrode cover 211 and the positive electrode connecting member 22 may be prevented by the positive electrode insulating member 23. Further, electrical connection between the positive electrode connecting member 22 and the negative electrode 12 may be prevented by the positive electrode insulating member 23.

The positive electrode connecting member 22 may include a positive electrode connecting cover plate 221, a positive electrode connecting protrusion 222, and a positive electrode connecting plate 223.

The positive electrode insulating member 23 may be attached to the positive electrode connecting cover plate 221, with the positive electrode connecting cover plate 221 facing the positive electrode cover 211. The positive electrode cover 211 may be a size that is greater than that of the positive electrode connecting cover plate 221.

The positive electrode connecting protrusion 222 may be formed on the positive electrode connecting cover plate 221 and connected to the positive electrode terminal 212. In particular, the positive electrode connecting protrusion 222 may be formed in a shape protruding from the positive electrode connecting cover plate 221 and inserted into a recessed space of the positive electrode terminal 212 to be in contact with the positive electrode terminal 212. The positive electrode connecting protrusion 222 may be integrally formed with the positive electrode connecting cover plate 221 or coupled to the positive electrode connecting cover plate 221. When the positive electrode connecting protrusion 222 is integrally formed with the positive electrode connecting cover plate 221, a recessed space may be formed at an opposite side of a protruding region of the positive electrode connecting protrusion 222.

The positive electrode connecting plate 223 may extend from the positive electrode connecting cover plate 221 and may be electrically connected to the positive electrode(s) 11. In some embodiments, the positive electrode connecting plate 223 may be integrally formed with the positive electrode connecting cover plate 221, and in other embodiments, the positive electrode connecting plate 223 may be coupled to the positive electrode connecting cover plate 221. The positive electrode connecting plate 223 may be a pair of positive electrode connecting plates 223 facing each other. The stacked positive electrode(s) 11 may be disposed between the pair of positive electrode connecting plates 223. The positive electrode connecting plates 223 may be in contact with the stacked positive electrode non-coated portion(s) 113. Welding may be used to maintain the connection between the positive electrode connecting plate 223 and the positive electrode non-coated portion 113.

The positive electrode insulating member 23 according to one embodiment of the present invention may include a first positive electrode insulating part 231, a second positive electrode insulating part 232, and a third positive electrode insulating part 233. The first positive electrode insulating part 231 may be attached to an upper surface of the positive electrode connecting cover plate 221. In particular, the first positive electrode insulating part 231 may cover the entire upper surface of the positive electrode connecting cover plate 221 and may have a size that corresponds to a size of the electrode assembly 10. The first positive electrode insulating part 231 may prevent direct contact between the positive electrode connecting cover plate 221 and the electrode assembly 10.

The second positive electrode insulating part 232 may be attached to a lower surface of the positive electrode connecting cover plate 221. The second positive electrode insulating part 232 may cover all or a portion of the positive electrode connecting cover plate 221. The second positive electrode insulating part 232 may prevent direct contact between the positive electrode connecting cover plate 221 and the positive electrode cover 211.

The third positive electrode insulating part 233 may be attached to a outer part of the positive electrode connecting protrusion 222. When the positive electrode connecting protrusion 222 is inserted into the positive electrode terminal 212, a lower surface of the positive electrode connecting protrusion 222 may be connected to the positive electrode terminal 212. But the third positive electrode insulating part 233 may prevent direct contact between the positive electrode connecting protrusion 222 and the positive electrode cover 211.

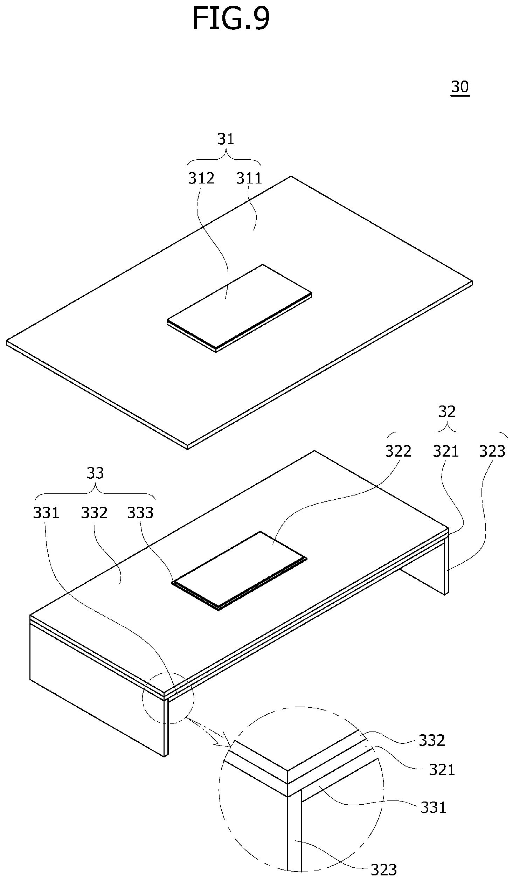

FIG. 9 is a schematic view of the negative electrode housing according to an embodiment of the present disclosure. Referring to FIG. 9, the negative electrode housing 30 may include a negative electrode cap 31, a negative electrode connecting member 32, and a negative electrode insulating member 33.

The negative electrode cap 31 may include a negative electrode cover 311 and a negative electrode terminal 312. The negative electrode cover 311 may form part of an exterior of the secondary battery 1. The negative electrode terminal 312 may be a portion of the negative electrode cover 311. In particular, the negative electrode terminal 312 may be a specific region to which electric energy may be transmitted from the negative electrode cover 311. In FIG. 9, the negative electrode cover 311 may be disposed to cover an upper portion of the electrode assembly 10, and the negative electrode terminal 312 may protrude downward or upward from the negative electrode cover 311. An opposite side of the negative electrode terminal 312 may have a recessed shape.

The negative electrode connecting member 32 may be electrically connected to the negative electrode(s) 12 and may be connected to the negative electrode terminal 312. A state in which the negative electrode(s) 12 and the negative electrode terminal 312 are electrically connected may be maintained by the negative electrode connecting member 32.

The negative electrode insulating member 33 may insulate the negative electrode connecting member 32. Except for the negative electrode terminal 312, electrical connection between the negative electrode cover 311 and the negative electrode connecting member 32 may be prevented by the negative electrode insulating member 33. Electrical connection between the negative electrode connecting member 32 and the positive electrode(s) 11 may be prevented by the negative electrode insulating member 33.

The negative electrode connecting member 32 may include a negative electrode connecting cover plate 321, a negative electrode connecting protrusion 322, and a negative electrode connecting plate 323.

The negative electrode insulating member 33 may be attached to the negative electrode connecting cover plate 321. The negative electrode connecting cover plate 321 may be disposed to face the negative electrode cover 311. The negative electrode cover 311 may be greater in size than the negative electrode connecting cover plate 321.

The negative electrode connecting protrusion 322 may be formed on the negative electrode connecting cover plate 321 and connected to the negative electrode terminal 312. The negative electrode connecting protrusion 322 may be formed in a shape protruding from the negative electrode connecting cover plate 321 and inserted into a recessed space of the negative electrode terminal 312 to be in contact with the negative electrode terminal 312. In some embodiments, the negative electrode connecting protrusion 322 may be integrally formed with the negative electrode connecting cover plate 321, and in other embodiments the negate electrode connecting protrusion 322 may be coupled to the negative electrode connecting cover plate 321. When the negative electrode connecting protrusion 322 is integrally formed with the negative electrode connecting cover plate 321, a recessed space may be formed at an opposite side of a protruding region of the negative electrode connecting protrusion 322.

The negative electrode connecting plate 323 may extend from the negative electrode connecting cover plate 321 and may be electrically connected to the negative electrode(s) 12. In some embodiments, the negative electrode connecting plate 323 may be integrally formed with the negative electrode connecting cover plate 321, and in other embodiments the negative electrode connecting plate 323 may be coupled to the negative electrode connecting cover plate 321. The negative electrode connecting plate 323 may be a pair of negative electrode connecting plates 323 facing each other. The stacked negative electrode(s) 12 may be disposed between the pair of negative electrode connecting plates 323. The negative electrode connecting plate 323 may be in contact with the stacked negative electrode non-coated portion(s) 123. Welding may be used to couple the negative electrode connecting plate 323 to the negative electrode non-coated portion(s) 123.

The negative electrode insulating member 33 according to one embodiment of the present invention may include a first negative electrode insulating part 331, a second negative electrode insulating part 332, and a third negative electrode insulating part 333.

The first negative electrode insulating part 331 may be attached to a lower surface of the negative electrode connecting cover plate 321. The first negative electrode insulating part 331 may cover the entire lower surface of the negative electrode connecting cover plate 321 or may have a size that corresponds to the size of the electrode assembly 10. The first negative electrode insulating part 331 prevents direct contact between the negative electrode connecting cover plate 321 and the electrode assembly 10.

The second negative electrode insulating part 332 may be attached to an upper surface of the negative electrode connecting cover plate 321. The second negative electrode insulating part 332 may cover all or a portion of the negative electrode connecting cover plate 321. The second negative electrode insulating part 332 may prevent direct contact between the negative electrode connecting cover plate 321 and the negative electrode cover 311.

The third negative electrode insulating part 333 may be attached to an outer part of the negative electrode connecting protrusion 322. When the negative electrode connecting protrusion 322 is inserted into the negative electrode terminal 312, an upper surface of the negative electrode connecting protrusion 322 may be connected to the negative electrode terminal 312. The third negative electrode insulating part 333 may prevent direct contact between the negative electrode connecting protrusion 322 and the negative electrode cover 311.

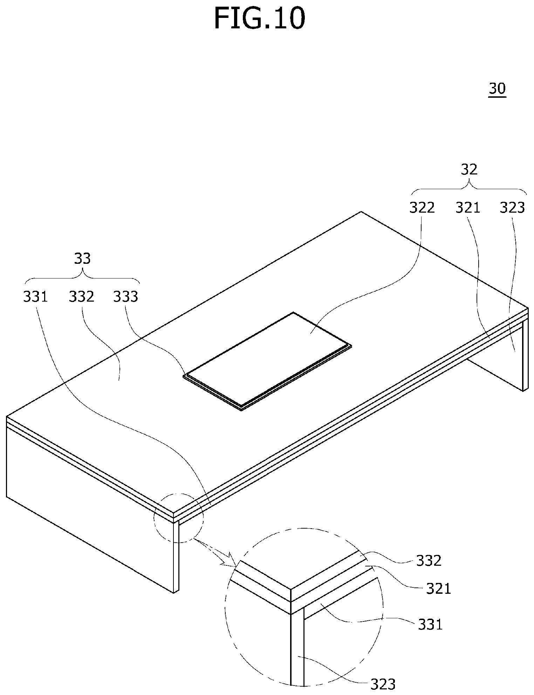

FIG. 10 is a schematic view a negative electrode insulating member according to an example of the present disclosure. Referring to FIG. 10, a first negative electrode insulating part 331 covers all of a lower surface of a negative electrode connecting cover plate 321 to prevent electrical contact between the negative electrode connecting cover plate 321 and an electrode assembly 10. A second negative electrode insulating part 332 covers all of an upper surface of the negative electrode connecting cover plate 321 to prevent electrical contact between the negative electrode connecting cover plate 321 and a negative electrode cover 311. A third negative electrode insulating part 333 covers an outer part of the negative electrode connecting protrusion 322 to prevent electrical contact between the negative electrode connecting protrusion 322 and the negative electrode cover 311. As the negative electrode insulating member 33 may be attached in the same manner as the positive electrode insulating member 23 is attached to a positive electrode housing 20, a detailed description thereof will be omitted.

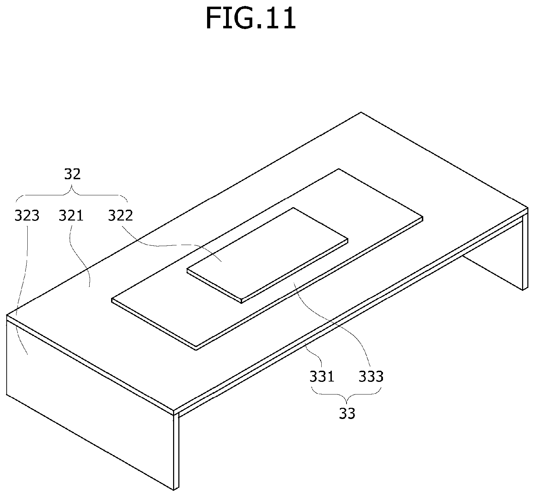

FIG. 11 is a schematic view of a negative electrode insulating member according to a second example of the present disclosure. Referring to FIG. 11, a first negative electrode insulating part 331 covers the entirety of a lower surface of a negative electrode connecting cover plate 321 to prevent electrical contact between the negative electrode connecting cover plate 321 and an electrode assembly 10. A second negative electrode insulating part 332 covers a portion of an upper surface of the negative electrode connecting cover plate 321 to prevent electrical contact between the negative electrode connecting cover plate 321 and a negative electrode cover 311. A third negative electrode insulating part 333 is provided in some embodiments. But when the negative electrode connecting protrusion 322 is sized and shaped such that it does not contact the negative electrode cover 311, the third negative electrode insulating part 333 may be omitted. Because the negative electrode insulating member 33 may be attached in the same manner as the positive electrode insulating member 23 is attached to a positive electrode housing 20, a detailed description thereof will be omitted.

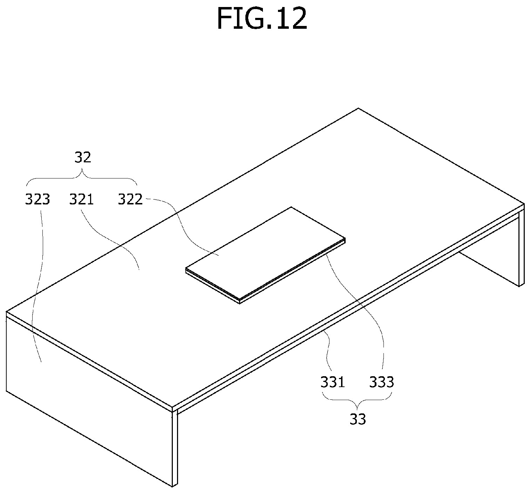

FIG. 12 is a schematic view of a negative electrode insulating member according to a third example of the present disclosure. Referring to FIG. 12, a first negative electrode insulating part 331 covers the entirety of a lower surface of a negative electrode connecting cover plate 321 to prevent electrical contact between the negative electrode connecting cover plate 321 and an electrode assembly 10. A third negative electrode insulating part 333 covers an outer part of a negative electrode connecting protrusion 322 to prevent electrical contact between the negative electrode connecting protrusion 322 and a negative electrode cover 311. A second negative electrode insulating part 332 may be provided. But when the negative electrode cover 311 and the negative electrode connecting cover plate 321 are spaced apart from each other, the second negative electrode insulating part 332 may be omitted. Because the negative electrode insulating member 33 may be attached in the same manner as the positive electrode insulating member 23 is attached to a positive electrode housing 20, a detailed description thereof will be omitted.

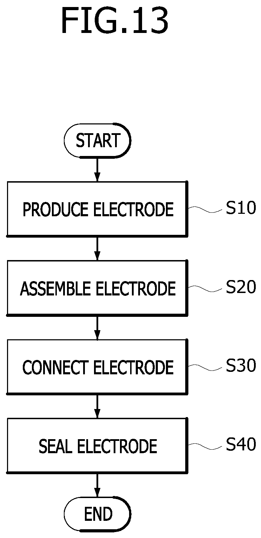

FIG. 13 is a flowchart illustrating a method of manufacturing a secondary battery according to an embodiment of the present disclosure. Referring to FIG. 13, the method includes an electrode production operation S10, an electrode assembly operation S20, an electrode connection operation S30, and an electrode sealing operation S40.

In the electrode production operation S10, the positive electrode 11 and the negative electrode 12 are produced, and the separator 13 which is a component of the electrode assembly 10 is also produced.

Referring to FIGS. 2 and 3, the positive electrode 11 may include the positive electrode plate 111, the positive electrode coated part 112, and the positive electrode non-coated portion 113. The positive electrode plate 111 may be the current collector formed of a thin metal foil, such as aluminum foil. The positive electrode coated part 112 may be the region in which the positive electrode plate 111 is coated with the positive electrode active material. Specific examples of the coating are transition metal oxides such as LiCoO2, LiNiO2, LiMn2O4, or the like. The positive electrode non-coated portion 113 may be the region in which the positive electrode plate 111 is not coated with the positive electrode active material. The positive electrode non-coated portion 113 may be coupled to the positive electrode housing 20.

A plurality of positive electrode mixture parts 112 may be spaced apart from each other in the width direction of the positive electrode plate 111 and coated with the positive electrode active material and the cut in the width direction of the positive electrode plate 111 in a slitting process. The positive electrode mixture parts 112 may thereby be disposed on the positive electrode plate 111. Both sides of the positive electrode plate 111 in the width direction may be the positive electrode non-coated portions 113. The positive electrode non-coated portion 113 may be disposed to have a length in the first direction, and the first direction may be the y-axis direction shown in FIGS. 2 and 3. The positive electrode coated parts 112 may be disposed between the positive electrode non-coated portions 113 disposed apart in the x-axis direction corresponding to the width direction of the positive electrode 11.

Referring to FIGS. 2 and 4, the negative electrode 12 may include the negative electrode plate 121, the negative electrode coated part 122, and the negative electrode non-coated portion 123. The negative electrode plate 121 may be the current collector formed of the thin metal foil, such as copper foil. The negative electrode coated part 122 may be the region in which the negative electrode plate 121 is coated with the negative electrode active material such as graphite or carbon. The negative electrode non-coated portion 123 may be the region in which the negative electrode plate 121 is not coated with the negative electrode active material. The negative electrode non-coated portion 123 may be coupled to the negative electrode housing 30. A plurality of negative electrode mixture parts 122 may be spaced apart from each other in the width direction of the negative electrode plate 121 and coated with the negative electrode active material and then cut in the width direction of the negative electrode plate 121 in a slitting process. As such the negative electrode mixture parts 122 may be disposed on the negative electrode plate 121. In this case, both sides of the negative electrode plate 121 in the width direction may be the negative electrode non-coated portions 123. The negative electrode non-coated portion 123 may be disposed to have the length in the second direction perpendicular to the first direction, with the second direction being the x-axis direction shown in FIGS. 2 and 4. The negative electrode coated parts 122 may be disposed between the negative electrode non-coated portions 123 disposed apart from each other in the y-axis direction corresponding to the width direction of the negative electrode 12.

In the electrode assembly operation S20, the separator(s) 13 may be disposed between the positive electrode(s) 11 and the negative electrode(s) 12, and the positive electrodes 11 and the negative electrodes 12 are alternately stacked. But a notching process conventionally performed on the positive electrode 11 and the negative electrode 12 is omitted. Referring to FIG. 5, in the electrode assembly 10, the negative electrodes 12, the separator(s) 13, the positive electrode(s) 11 may be sequentially and repeatedly stacked. The separator 13 may cover the negative electrode coated part 122, and the edge of the separator 13 may cover the portion of the negative electrode non-coated portion 123. The separator 13 may cover the positive electrode coated part 112, and the edge of the separator 13 may cover the portion of the positive electrode non-coated portion 113. Thus, contact between the positive electrode 11 and the negative electrode 12 may be prevented by the separator 13. The separator 13 may have a size that covers both the negative electrode coated part 122 and the positive electrode coated part 112.

In the electrode connection operation S30, the positive electrode housing 20 may be electrically connected to the positive electrode(s) 11, and the negative electrode housing 30 may be electrically connected to the negative electrode(s) 12.

The positive electrode housing 20 may cover the portion of the electrode assembly 10 and electrically separated from the negative electrode(s) 12. As shown in FIG 2, the positive electrode housing 20 may cover the lower portion of the electrode assembly 10. The negative electrode housing 30 may cover the portion of the electrode assembly 10 and may be electrically separated from the positive electrode(s) 11. As shown in FIG. 2, the negative electrode housing 30 may cover the upper portion of the electrode assembly 10.

The positive electrode housing 20 may include the positive electrode cap 21, the positive electrode connecting member 22, and the positive electrode insulating member 23. The positive electrode cap 21 may include the positive electrode cover 211 and the positive electrode terminal 212. The positive electrode cover 211 may form a part of the exterior of the secondary battery 1. The positive electrode terminal 212 may be the portion of the positive electrode cover 211. The positive electrode connecting member 22 may be electrically connected to the positive electrode(s) 11 and may be connected to the positive electrode terminal 212. The positive electrode insulating member 23 may insulate the positive electrode connecting member 22. Except for the positive electrode terminal 212, electrical connection between the positive electrode cover 211 and the positive electrode connecting member 22 may be prevented by the positive electrode insulating member 23. The positive electrode connecting member 22 may be welded to the positive electrode non-coated portion 113 and a conventional notching process need not be performed.

The negative electrode housing 30 may include the negative electrode cap 31, the negative electrode connecting member 32, and the negative electrode insulating member 33. The negative electrode cap 31 may include the negative electrode cover 311 and the negative electrode terminal 312. The negative electrode cover 311 may form a part of the exterior of the secondary battery 1. The negative electrode terminal 312 may be the portion of the negative electrode cover 311. The negative electrode connecting member 32 may be electrically connected to the negative electrode 12 and may be connected to the negative electrode terminal 312. The negative electrode insulating member 33 may insulate the negative electrode connecting member 32. Except for the negative electrode terminal 312, electrical connection between the negative electrode cover 311 and the negative electrode connecting member 32 may be prevented by the negative electrode insulating member 33. The negative electrode connecting member 32 may be welded to the negative electrode non-coated portion 123 and a conventional notching process need not be performed.

In the electrode sealing operation S40, the case 40 may be coupled to the positive electrode housing 20 and the negative electrode housing 30 to seal the positive electrode(s) 11 and the negative electrode(s) 12. A cross section of the case 40 may have a quadrangular shape. A lower edge of the case 40 may be coupled to the positive electrode housing 20 by welding. An upper edge of the case 40 may be coupled to the negative electrode housing 30 by welding. The electrode assembly 10 may be sealed by the positive electrode housing 20, the negative electrode housing 30, and the case 40.

In the electrode assembly operation S20, when the separator 13 is individually formed, the separator(s) 13 may be disposed between the positive electrode(s) 11 and the negative electrode(s) 12. Referring to FIG. 6, in the electrode assembly 10 according to the first example, the separators 13 may be individually formed and disposed between the positive electrodes 11 and the negative electrodes 12. The separator 13 may be sized to cover the positive electrode mixture part 112 and the negative electrode mixture part 122. In FIG. 6, the negative electrode housing 30 and the negative electrode non-coated portion 123 may be coupled by welding. In this case, the parts of the separators 13 protruding further than the negative electrode non-coated portions 123 may be melted and thereby removed by the heat generated during the welding process.

In the electrode assembly operation S20, the separator 13 may be stacked in a zigzag type, and the positive electrodes 11 and the negative electrodes 12 may be alternately inserted to the separator 13. Referring to FIG. 7, in the electrode assembly 10 according to the second example, the separator 13 may be stacked in the zigzag type, and the positive electrodes 11 and the negative electrodes 12 may be alternately inserted into the separator 13. In FIG. 7, the negative electrode housing 30 may be coupled to the negative electrode non-coated portion 123 by welding. In this case, the separator 13, which is formed in a zigzag shape and surrounds the negative electrode non-coated portion 123, may be melted and thereby removed by the heat generated during the welding process.

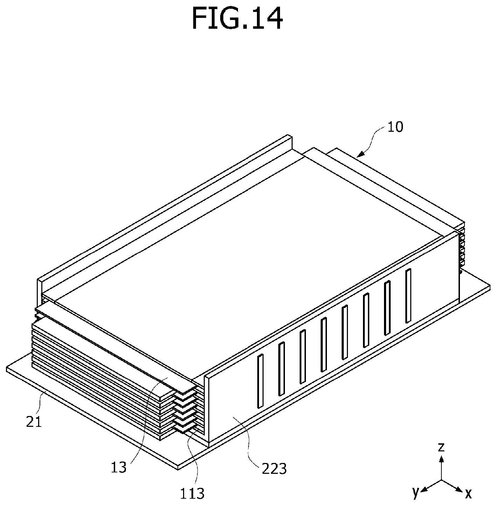

FIG. 14 is a schematic view of a state in which the positive electrode non-coated portion is welded to the positive electrode housing according to an embodiment of the present disclosure. Referring to FIGS. 8 and 14, in the positive electrode(s) 11, the positive electrode non-coated portion(s) 113 (on which the notching process is not performed) may be welded to the positive electrode housing 20. The electrode assembly 10 in which the positive electrode(s) 11, the negative electrode(s) 12, and the separator 13 are stacked may be disposed in the positive electrode housing 20 seated in a jig. The positive electrode non-coated portion(s) 113 provided in each of the positive electrodes 11 may be disposed as a pair of positive electrode non-coated portions 113 spaced apart from each other in the x-axis direction. The positive electrode cap 21 may cover a lower portion of the electrode assembly 10, and the positive electrode connecting member 22 may be in contact with the positive electrode non-coated portion 113 (on which the notching process is not performed). The positive electrode non-coated portion 113 and the positive electrode connecting member 22 may be coupled by welding.

That is, the positive electrode connecting cover plate 221 may be disposed to face the positive electrode cover 211, and the positive electrode connecting protrusion 222 may be connected to the positive electrode terminal 212 formed in the positive electrode cover 211. In addition, the positive electrode non-coated portions 113 may be disposed between the positive electrode connecting plates 223 that protrude upward from the positive electrode connecting cover plate 221 and face each other. The positive electrode non-coated portions 113, disposed on both sides of the positive electrode coating part 112, may be in contact with the positive electrode connecting plate 223, and the state in which the positive electrode non-coated portions 113 and the positive electrode connecting plate 223 are coupled may be maintained by a laser welding process.

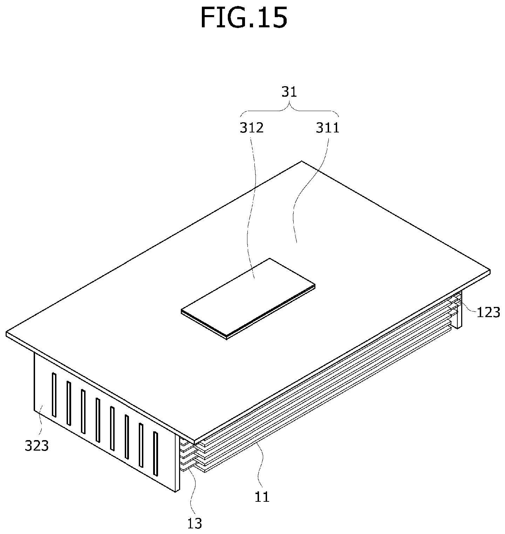

FIG. 15 is a schematic view of a state in which the negative electrode non-coated portion is welded to the negative electrode housing according to an embodiment of the present disclosure. Referring to FIGS. 9 and 15, in the negative electrode(s) 12, the negative electrode non-coated portion(s) 123 (on which the notching process is not performed) may be welded to the negative electrode housing 30. In a state in which the electrode assembly 10 includes the stacked the positive electrodes 11, the negative electrodes 12, and the separator(s) 13 and is supported by the jig, each of the negative electrode non-coated portions 123 provided in the negative electrodes 12 may be disposed as a pair of negative electrode non-coated portions 123 spaced apart from each other in the y-axis direction. The negative electrode cap 31 may cover an upper portion of the electrode assembly 10, and the negative electrode connecting member 32 may be in contact with the negative electrode non-coated portion 123 (on which the notching process is not performed). The negative electrode non-coated portions 123 and the negative electrode connecting member 32 may be coupled by welding.

That is, the negative electrode connecting cover plate 321 may be disposed to face the negative electrode cover 311, and the negative electrode connecting protrusion 322 may be connected to the negative electrode terminal 312 formed in the negative electrode cover 311. In addition, the negative electrode non-coated portions 123 may be disposed between the negative electrode connecting plates 323 that protrude downward from the negative electrode connecting cover plate 321 and face each other. The negative electrode non-coated portions 123 disposed on both sides of the negative electrode coated parts 122 are in contact with the negative electrode connecting plate 323, and the state in which the negative electrode non-coated portions 123 and the negative electrode connecting plate 323 are coupled to each other may be maintained by a laser welding process.

In the secondary battery and the method of manufacturing a secondary battery according to an embodiment of the present disclosure, a conventional notching process on the positive electrode non-coated portions 113 provided in the positive electrodes 11 and the negative electrode non-coated portions 123 provided in the negative electrodes 12 is omitted, and the positive electrode non-coated portions 113 are connected to the positive electrode housing 20, and the negative electrode non-coated portions 123 are connected to the negative electrode housing 30. Thus, the efficiency of the manufacturing process is improved.

In the secondary battery and the method of manufacturing a secondary battery according to an embodiment of the present disclosure, the separator(s) 13 may be disposed between the positive electrodes 11 and the negative electrodes 12, the insulated positive electrode housing 20 may be connected to the positive electrodes 11 to enable electrical transmission, and the insulated negative electrode housing 30 may be connected to the negative electrodes 12 to enable electrical transmission.

In a secondary battery and a method of manufacturing a secondary battery according to an embodiment of the present disclosure, an additional notching process for a positive electrode non-coated portion provided in a positive electrode and a negative electrode non-coated portion provided in a negative electrode is omitted, but the positive electrode non-coated portion is connected to a positive electrode housing, and the negative electrode non-coated portion is connected to a negative electrode housing. Thus, the efficiency of the manufacturing process is improved.

In a secondary battery and a method of manufacturing a secondary battery according to an embodiment of the present disclosure, a separator can be disposed between a positive electrode and a negative electrode, an insulated positive electrode housing can be connected to positive electrode to enable electrical transmission, and the insulated negative electrode housing can be connected to the negative electrode to perform enable electrical transmission.

In accordance with still another aspect of the present disclosure, a battery module manufactured using a secondary battery with an improved structure, a battery pack, and a vehicle including the same can be provided.

However, the effects obtainable through the present disclosure are not limited to the effects described above, and other technical effects that are not mentioned will be clearly understood by those skilled in the art from the following description of the present disclosure.

While the present disclosure has been described with reference to embodiments shown in the drawings, these embodiments are merely illustrative and various modifications and other equivalent embodiments can be derived by those skilled in the art on the basis of the embodiments.

## Claims

1. A secondary battery (1) comprising:
an electrode assembly (10) in which positive electrodes (11) and negative electrodes (12) are alternately stacked and at least one separator (13) is disposed between the positive electrodes (11) and the negative electrodes (12);
a positive electrode housing (20) covering a part (112,) of the electrode assembly (10) and electrically connected to the positive electrodes (11);
a negative electrode housing (30) covering a part (122) of the electrode assembly (10) and electrically connected to the negative electrodes (12); and
a case (40) coupled to the positive electrode housing (20) and the negative electrode housing (30) to seal the electrode assembly (10),
wherein the positive electrodes (11) and the negative electrodes (12) are coupled to the positive electrode housing (20) and the negative electrode housing (30), respectively, without being subjected to a notching process.

2. The secondary battery (1) as claimed in claim 1, wherein each of the positive electrodes (11) includes a positive electrode plate (111), and each of the positive electrode plates (111) includes:
a positive electrode (11) coated portion coated with an active material, and
a positive electrode non-coated portions (113) disposed at edges of the positive electrode plate (111), the positive electrode non-coated portions (113) not coated with the active material and coupled to the positive electrode housing (20).

3. The secondary battery (1) as claimed in claim 2, wherein the positive electrode non-coated portions (113) have lengths in a first direction.

4. The secondary battery (1) as claimed in claims 1 to 3, wherein each of the negative electrodes (12) includes a negative electrode plate (121), and each of the negative electrode plates (121) includes:
a negative electrode (12) coated portion coated with an active material, and
a negative electrode non-coated portions (123) disposed at edges of the negative electrode plate (121), the negative electrode non-coated portions (123) not coated with the active material and coupled to the negative electrode housing (30).

5. The secondary battery (1) as claimed in claim 4, wherein the negative electrode non-coated portions (123) have lengths in a second direction perpendicular to the first direction.

6. The secondary battery (1) as claimed in claim 5, wherein lengths of the positive electrode non-coated portions (113) is 150% to 200% of lengths of the negative electrode non-coated portions (123).

7. The secondary battery (1) as claimed in claim 5 or 6, wherein lengths of the negative electrode (12) coated portions are greater than widths of the positive electrode (11) coated portions, and the at least one separator (13) prevents contact between the positive electrode (11) coated portions and the negative electrode (12) coated portions.

8. The secondary battery (1) as claimed in claims 1 to 7, wherein a plurality of separators (13) are provided, with each of the separators (13) being provided between one of the positive electrodes (11) and one of the negative electrodes (12).

9. The secondary battery (1) as claimed in claims 1 to 8, wherein the at least one separator (13) is stacked in a zigzag shape, and each of the positive electrodes (11) and the negative electrodes (12) is provided to the separator (13).

10. The secondary battery (1) as claimed in claims 1 to 9, wherein the positive electrode housing (20) includes:
a positive electrode cap (21) in which a positive electrode terminal (212) is formed,
a positive electrode connecting member (22) that is electrically connected to the positive electrodes (11) and to the positive electrode terminal (212), and
a positive electrode insulating member (23) that insulates the positive electrode connecting member (22).

11. The secondary battery (1) as claimed in claim 10, wherein the positive electrode connecting member (22) includes:
a positive electrode connecting cover plate (221) to which the positive electrode insulating member (23) is attached;
a positive electrode connecting protrusion (222) that protrudes from the positive electrode connecting cover plate (221) and is connected to the positive electrode terminal (212); and
a positive electrode connecting plate (223) that extends from the positive electrode connecting cover plate (221) and is electrically connected to the positive electrodes (11).

12. The secondary battery (1) as claimed in claim 11, wherein the positive electrode insulating member (23) includes two or more of:
a first positive electrode insulating part (231) attached to an upper surface of the positive electrode connecting cover plate (221),
a second positive electrode insulating part (232) attached to a lower surface of the positive electrode connecting cover plate (221), and
a third positive electrode insulating part (233) attached to an outer part of the positive electrode connecting protrusion (222).

13. The secondary battery (1) as claimed in claims 1 to 12, wherein the negative electrode housing (30) includes:
a negative electrode cap (31) in which a negative electrode terminal (312) is formed,
a negative electrode connecting member (32) that is electrically connected to the negative electrodes (12) and the negative electrode terminal (312); and
a negative electrode insulating member (33) that insulates the negative electrode connecting member (32).

14. The secondary battery (1) as claimed in claim 13, wherein the negative electrode connecting member (32) includes:
a negative electrode connecting cover plate (321) to which the negative electrode insulating member (33) is attached,
a negative electrode (12) connecting protrusion that protrudes from the negative electrode connecting cover plate (321) and is connected to the negative electrode terminal (312), and
a negative electrode connecting plate (323) that extends from the negative electrode connecting cover plate (321) and is electrically connected to the negative electrodes (12).

15. A method of manufacturing a secondary battery (1) comprising:
an electrode production operation of producing positive electrodes (11) and negative electrodes (12);
an electrode assembly (10) operation of alternately stacking the positive electrodes (11) and the negative electrodes (12) and arranging at least one separator (13) between the positive electrode (11) sand the negative electrodes (12), with a notching process not being performed on the positive electrodes (11) and the negative electrodes (12);
an electrode connection operation of electrically connecting a positive electrode housing (20) to the positive electrodes (11) and electrically connecting a negative electrode housing (30) to the negative electrodes (12); and
an electrode sealing operation of coupling a case (40) to the positive electrode housing (20) and the negative electrode housing (30) to seal the positive electrodes (11) and the negative electrodes (12).
